(19) Europäisches Patentamt / European Patent Office / Office européen des brevets

(11) **EP 2 677 653 A1**

(12) **EUROPEAN PATENT APPLICATION**

(43) Date of publication:
**25.12.2013 Bulletin 2013/52**

(51) Int Cl.:
***H02M 7/483*** (2007.01)

(21) Application number: **12172522.0**

(22) Date of filing: **19.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventors:
• **Das, Anandarup**
**7022 Trondheim (NO)**
• **Nademi, Hamed**
**7011 Trondheim (NO)**
• **Norum, Lars**
**7013 Trondheim (NO)**

(54) **Modular multilevel converter**

(57) It is described a modular multilevel converter (100) for converting a direct current voltage into an alternating current voltage. The modular multilevel converter comprises a plurality of phase units (102, 103, 104) being arranged in parallel, each phase unit comprising an upper converter arm and a lower converter arm, each converter arm having a plurality of cells (107, 108, 109, 110, 111, 112) being arranged in series, wherein each cell (107, 108, 109, 110, 111, 112) comprises a direct current capacitor, wherein each phase unit (102, 103, 104) is connectable to a direct current voltage source (202). The modular multilevel converter (100) comprises a control unit being adapted to control the cells (107, 108, 109, 110, 111, 112) of the phase units (102, 103, 104) to convert a direct current input voltage (105) from the direct current voltage source (202) into an alternating current output voltage by charging at least one direct current capacitor of a phase unit (102, 103, 104) with the direct current input voltage (105). The modular multilevel converter (100) further comprises a measuring unit (208) being adapted to measure a lower converter arm current of each phase unit (102, 103, 103) and an upper converter arm current of each phase unit (102, 103, 104), and an observing unit (101) being adapted to estimate a capacitor voltage of each cell (107, 108, 109, 110, 111, 112) based on the measured converter arm currents and based on the direct current input voltage (105). The control unit is adapted to control the power conversion by controlling each phase unit (102, 103, 104) based on the estimated capacitor voltages.

FIG 2

EP 2 677 653 A1

**Description**

Field of invention

The present invention relates to a modular multilevel converter. Further, the present invention relates to a method for converting power by using such a modular multilevel converter. Moreover, the present invention relates to a computer program and to a computer-readable medium.

Art Background

A Modular Multilevel Converter (MMC) is an attractive solution for power conversion without transformers. As MMC consists of cascade connections and floating dc capacitors, it requires continuous voltage monitoring. The Modular Multilevel Converter (MMC) is one of the most promising multilevel converter topologies proposed in recent times. There are many advantages of this converter over conventional ones and mainly features are the following: simple realization of redundancy, low device ratings, easy scalability and a possibility of common DC bus configuration for multi-drive applications. Almost all of the existing investigations regarding this topology are based on the fundamental function of it, averaging and balancing control of the capacitor voltages. Capacitor voltage balancing or control can be obtained by a feedback control loop using voltage sensors. On the one hand, using voltage sensors to measure the capacitor voltages is a relative straightforward approach. On the other hand, as the number of cascaded modules increases, it will be necessary to increase the number of voltage sensors which might result in an increased hardware complexity, which will influence negatively the system reliability. For reliable operation of inverters being part of the MMC, a decrease of the number of measurement sensors might be necessary.

Thus, there may be a need for an improved modular multilevel converter decreasing the number of measurement sensors.

Summary of the Invention

This need may be met by the subject matter according to the independent claims. Advantageous embodiments of the present invention are described by the dependent claims.

According to an embodiment, there is provided a modular multilevel converter for converting a direct current voltage into an alternating current voltage. The modular multilevel converter comprises a plurality of phase units being arranged in parallel, each phase unit comprising an upper converter arm and a lower converter arm, each converter arm having a plurality of cells being arranged in series, wherein each cell comprises a direct current capacitor. Each phase unit is connectable (via a common node for all phase units) to a direct current voltage source. The modular multilevel converter comprises a control unit being adapted to control the cells of the phase units to convert a direct current input voltage from the direct current voltage source into an alternating current output voltage by charging at least one direct current capacitor of a phase unit with the direct current input voltage. The modular multilevel converter further comprises a measuring unit being adapted to measure a lower converter arm current of each phase unit and an upper converter arm current of each phase unit, and an observing unit being adapted to estimate a capacitor voltage of each cell based on the measured converter arm currents and based on the direct current input voltage, wherein the control unit is further adapted to control the power conversion by controlling each phase unit based on the estimated capacitor voltages.

This embodiment is based on the idea to decrease the number of measuring sensors by using the actual arm currents and the input voltage to determine the actual capacitor voltages. Based on an estimation of the capacitor voltages, the cells may be monitored and the phase units may be controlled.

The cells may be used for generate voltage steps, wherein each cell is adapted to generate a voltage step by charging the direct current capacitor with the input voltage, or at least a part of the input voltage. During the lifetime of a capacitor, the capacitor may be damaged or destructed. This may occur because of electrolytic reaction, effect of temperature, humidity, other factors of the system, or simply by aging. Thus, it may be necessary to know the actual status, e.g., the conditions or characteristics, of each capacitor, for instance to know what percent of capacitance is reduced and when or how it can or should be replaced by a new one. However, it is hard to measure directly the capacitance since capacitor banks are usually placed inside the converter system. To overcome this difficulty, the herein described converter uses an estimation of the capacitances. Some estimation methods have already been proposed which are based on the increase of the internal equivalent series resistance of the capacitor with the aging. But a main disadvantage is that those approaches are not suitable for online application.

From a control theory point of view, an observer is considered as a software sensor used to estimate the un-measurable variables of a system. The objective of the herein described converter is to design an observer for MMC in order to estimate the un-measurable voltages of the capacitors using the arm currents and the dc-voltage source.

A direct current capacitor as described herein may denote a capacitor being used in a direct current system.

According to a further embodiment, the control unit is further adapted to control the capacitor voltage of each cell by switching the cells based on the estimated capacitor voltages.

In order to control the power conversion, the cells may be switched on or off to provide a conversion of direct current (dc) voltage to alternating current (ac) voltage. This may be based on the estimated capacitor voltages. Hence, the capacitor voltages may be changed when the cells are switched on or off. Thereby, also a failure or malfunction of a cell may be detected and catched.

According to a further embodiment, the observing unit is further adapted to estimate the capacitance of each cell based on the measured converter arm currents and based on the direct current input voltage.

In addition to the voltage of each capacitor, the capacitance of each capacitor may be estimated. As the capacitance and the voltage depend on each other, this may be done in a simple way.

According to a further embodiment, the control unit is further adapted to switch on a part of the cells of one phase unit and to bypass the other part of the cells of the phase unit at the same point of time, such that the sum of the switched-on cells in the phase unit is equal to the direct current input voltage.

To generate the ac voltage, the cells, i.e., the capacitors, may be switched on and off (or bypassed). By this switching, the ac voltage will be generated.

With many cells connected in series, the output voltage of the converter can be made relatively smooth and no or very little filtering might be required to improve the output voltage quality.

Multilevel converters have recently been employed for converting between a DC (direct current) voltage and an AC (alternating current) voltage. Such converters provide different voltage levels by which an AC voltage can for example be synthesized. The converter may further use a pulse width modulation (PWM) technique in the generation of the AC voltage. The use of different voltage levels at the AC output may further reduce the required switching frequency for PWM. Similarly, such converter may be used for generating a DC voltage from an AC voltage input.

The multilevel converter may be connected to a DC power source and an AC load. The DC link voltage may be provided by a rectifier or a DC voltage source. The multilevel converter may have at least or exactly three converter legs (herein called phase units) which are connected in parallel between the DC terminals. The DC voltage source may comprises two parts, with the link between the two parts being set to zero voltage potential. The converter may basically consist of 2N identical cells in each phase. When many numbers of cells are connected in series, a multilevel voltage waveform can be obtained at the output by inserting or bypassing some of the cells. This may not only be advantageous concerning maintenance aspects; it also may feature operation for a certain period even when a few cells are subject to fault. It may also be relatively easier to adjust the voltage and power levels because its scalable voltage level can implement the staircase output waveforms.

According to a further embodiment, the observing unit is adapted to perform an adaptive control method by adapting gain values, which are used as adjusting parameters for estimating the capacitor values.

Gain values may be used as adjusting parameters. Based on a continued estimation, the gain values may be adapted. When the measured arm currents change, the estimation may be adjusted and the gain values may be used for this adjustment.

According to a further embodiment, the observing unit is adapted to adapt the gain values based on an error of the estimated capacitor values.

An error of the estimated capacitor values may be estimated, for instance based on an estimation error of the arm currents. In particular, the gain values may be used in combination with a non-linear function of the arm currents estimation errors.

According to a further embodiment, the modular multilevel converter further comprises a rectifier having an input and an output, wherein the input is coupled with the direct current voltage source, and wherein the output is coupled to the observing unit for supplying a rectified direct current input voltage to the observing unit.

The first parameter for estimating the capacitor voltages may be the arm currents due to these are controlled variables and based on these currents, it may possible to estimate the capacitor voltages. Afterwards, as a second parameter, the dc-link voltage state $V_{dc}$ may be used because of the capacitors voltages references depend on it. One way to do this is to take a measurement of this voltage, especially if the converting part is supplied by a controlled rectifier (so that this measurement is already available). However, in other applications, the output voltage van may be required, e.g., for fault detection algorithms.

According to a further embodiment, the observing unit is part of the control unit of the modular multilevel converter.

The observing unit may be integrated into the control unit of the modular multilevel converter. As described above, the control unit may be used for controlling the phase units of the modular multilevel converter. The control unit may be a central control unit of the MMC.

According to a further embodiment, each cell comprises a switch.

The switches may be used for bypassing or connecting the capacitors with the input voltage. The switches may be controlled for instance via the control unit.

It should be understood that features (individually or in any combination) disclosed, described, used for or mentioned in respect to the description of an embodiment the modular multilevel converter may also be (individually or in any combination) applied, used for, or employed for a method for converting a direct current voltage into an alternating current voltage.

According to a further embodiment, a method for converting a direct current voltage into an alternating current voltage by a modular multilevel converter is provided, wherein the modular multilevel converter comprises a plurality of phase units being arranged in parallel, each phase unit comprising an upper converter arm and a lower converter arm, each converter arm having a plurality of cells being arranged in series, wherein each cell comprises a direct current capacitor, wherein each phase unit is connected to a direct current voltage source. The method comprises controlling, by a control unit, the cells of the phase units to convert a direct current input voltage from the direct current voltage source into an alternating current output voltage by charging at least one direct current capacitor of a phase unit with the direct current input voltage, measuring, by a measuring unit, a lower converter arm current of each phase unit and an upper converter arm current of each phase unit, estimating, by an observing unit, a capacitor voltage of each cell based on the measured converter arm currents and based on the direct current input voltage, and controlling, by the control unit, the power conversion by controlling each phase unit based on the estimated capacitor voltages.

According to a further aspect of the invention, there is provided a computer program for converting a direct current voltage into an alternating current voltage by a modular multilevel converter, the computer program, when being executed by a data processor, is adapted for controlling the method as described above.

According to a further aspect of the invention, there is provided a computer-readable medium, in which a computer program for converting a direct current voltage into an alternating current voltage by a modular multilevel converter is stored, which computer program, when being executed by a processor, is adapted to carry out or control a method as described above.

As used herein, reference to a computer program is intended to be equivalent to a reference to a program element and/or a computer readable medium containing instructions for controlling a computer system to coordinate the performance of the above described method.

The computer program may be implemented as computer readable instruction code by use of any suitable programming language, such as, for example, JAVA, C++, and may be stored on a computer-readable medium (removable disk, volatile or nonvolatile memory, embedded memory/processor, etc.). The instruction code is operable to program a computer or any other programmable device to carry out the intended functions. The computer program may be available from a network, such as the World Wide Web, from which it may be downloaded.

The herein disclosed subject matter may be realized by means of a computer program respectively software. However, the herein disclosed subject matter may also be realized by means of one or more specific electronic circuits respectively hardware. Furthermore, the herein disclosed subject matter  may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.


Brief Description of the Drawings

Embodiments of the present invention are now described with reference to the accompanying drawings to which the invention is not limited.

Fig. 1 illustrates a modular multilevel converter according to an embodiment;

Fig. 2 illustrates a modular multilevel converter according to a further embodiment;

Fig. 3 illustrates a phase unit of the modular multilevel converter of Figs. 1 and 2 according to an embodiment;

Fig. 4 illustrates a cell of the phase unit of Fig. 3 according to an embodiment;

Fig. 5 illustrates actual capacitor voltages of the modular multilevel converter of Figs. 1 and 2;

Fig. 6 illustrates estimated capacitor voltages of the modular multilevel converter of Figs. 1 and 2;

Fig. 7 illustrates an estimated error for the voltage of one capacitor;

Fig. 8 illustrates measured currents of an upper converter arm, a lower converter arm and a load;

Fig. 9 illustrates estimated currents of an upper converter arm, a lower converter arm and a load;

Fig. 10 illustrates an estimated capacitance value of an upper converter arm and a lower converter arm;

Fig. 11 illustrates estimated capacitor voltages under step change in $V_{dc}$.

Detailed Description

The illustration in the drawings is in schematic form. It is noted that in different figures, similar or identical elements are provided with the same reference signs.

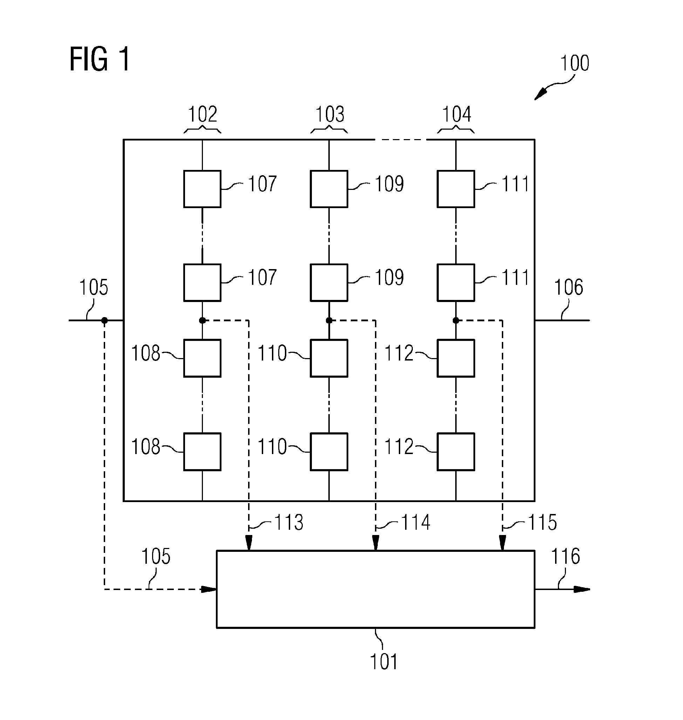

Fig. 1 illustrates a modular multilevel converter 100 for converting a direct current voltage into an alternating current voltage. The modular multilevel converter (MMC) comprises a plurality of phase units 102, 103, 104 being arranged in parallel. Each phase unit comprises an upper converter arm 107, 109, 111 and a lower converter arm 108, 110, 112, each converter arm having a plurality of cells) being arranged in series. Each cell 107, 108, 109, 110, 111, 112 comprises a direct current capacitor.

Each phase unit 102, 103, 104 is connected to a direct current voltage source (not shown) via a common connection line.

The modular multilevel converter 100 is adapted to control the cells 107, 108, 109, 110, 111, 112 of the phase units 102, 103, 104 (in the following also called phase-legs) to convert a direct current input voltage 105 from the direct current voltage source into an alternating current output voltage by charging at least one direct current capacitor of a phase unit 102, 103, 104 with the direct current input voltage 105.

The modular multilevel converter 100 further comprises a measuring unit (not shown) being adapted to measure a lower converter arm current of each phase unit 102, 103, 103 and an upper converter arm current of each phase unit 102, 103, 104. The measuring unit is coupled to an observing unit 101 and supplies the arm currents 113, 114, 115 of each phase unit to the observing unit.

The observing unit 101 is adapted to estimate a capacitor voltage of each cell 107, 108, 109, 110, 111, 112 based on the measured converter arm currents and based on the direct current input voltage 105. The modular multilevel converter 100 is adapted to control the power conversion by controlling each phase unit 102, 103, 104 based on the estimated capacitor voltages.

A Modular Multilevel Converter (MMC) is an attractive solution for power conversion without transformers. As MMC consists of cascade connections and floating dc capacitors as shown in Fig. 1, it requires continuous voltage monitoring.

An adaptive observer design is described herein to estimate the capacitor voltages from the measurement of arm currents. This observing unit (in the following also called observer) introduces a capacitance value of the cell capacitors as a parameter uncertainty for making the system performance robust with unknown constant parameters. Stability and convergence of the proposed observing unit will be analytically proved using Lyapunov theory.

As already mentioned above, it is important to decrease the number of measurement sensors, for reliable operation of inverters. Hence, the estimation of such voltages by means of an observer becomes an attractive and economical option.

The first measurement considered is the arm currents as controlled variables which are used to estimate the capacitor voltages. Afterwards, the dc-link voltage state $V_{dc}$ is used because of the capacitors voltages references depend on it.

As explained, the capacitor destruction can occur because of the electrolytic reaction, effect of temperature, humidity and some variable factors of the system, or simply by aging. So it may be necessary to know what percent of capacitance is reduced and when it can be replaced by a new one. However, it is hard to measure directly the capacitance since capacitor banks are usually placed inside the converter system.

The idea of the herein described MMC is to design an observer for MMC in order to estimate the un-measurable voltages of the capacitors using the arm currents and the dc-voltage source. Furthermore, it is assumed that the capacitance value of the cell capacitors is a parameter uncertainty for making the system performance robust with unknown constant parameters. To compensate the uncertainty, a nonlinear adaptive control method may be adopted to derive the control algorithm, and the uncertainty adaptation laws can also be derived systematically. The observer stability study based on the Lyapunov theory may guarantee the stability and convergence of the estimated quantities.

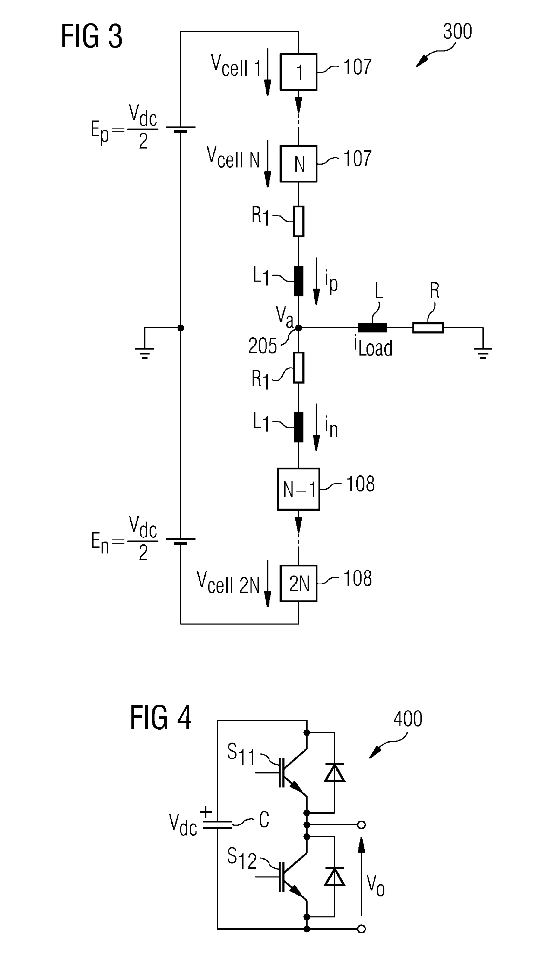

One cell 400 of such a MMC is shown in Fig. 4. When the switching device $S_{12}$ is on and $S_{11}$ is off, the output voltage $V_o = 0$; when the switching device $S_{12}$ is off and $S_{11}$ is on, the voltage $V_o = V_{dc}$.

Without loss of generality, an analysis as described in the following is applied to one phase unit 300 of the MMC including N cells for each arm (as shown in Fig. 3). At a common node 205 of the upper and the lower arm, the output voltage $V_a$ is present. The upper arm current $i_p$ may be measured at an upper inductor $L_1$. The lower arm current $i_n$ may be measured at a lower inductor $L_1$. Further, the load current $i_{Load}$ may be measured at an inductor L after the common node 205.

Every phase-leg or phase unit is composed of two arms where each arm has a number of N cells. In turn, in every cell there is a DC capacitor charged with the voltage $V_{dc}$. It should be noted that during any moment, half the cells are connected and half the cells are bypassed. This is necessary since the sum of all connected cells in a phase-leg must be $V_{dc}$.

In the following, an exemplary control strategy will be described based on adaptive algorithm used to design an observer for estimating the un-measurable states in the case that neither of the voltage sensors is available. However, it should be noted that this strategy and algorithm is only exemplary and should not be considered in a limiting way.

The described algorithm considers a systematic construction of both feedback control laws as well as related Lyapunov functions.

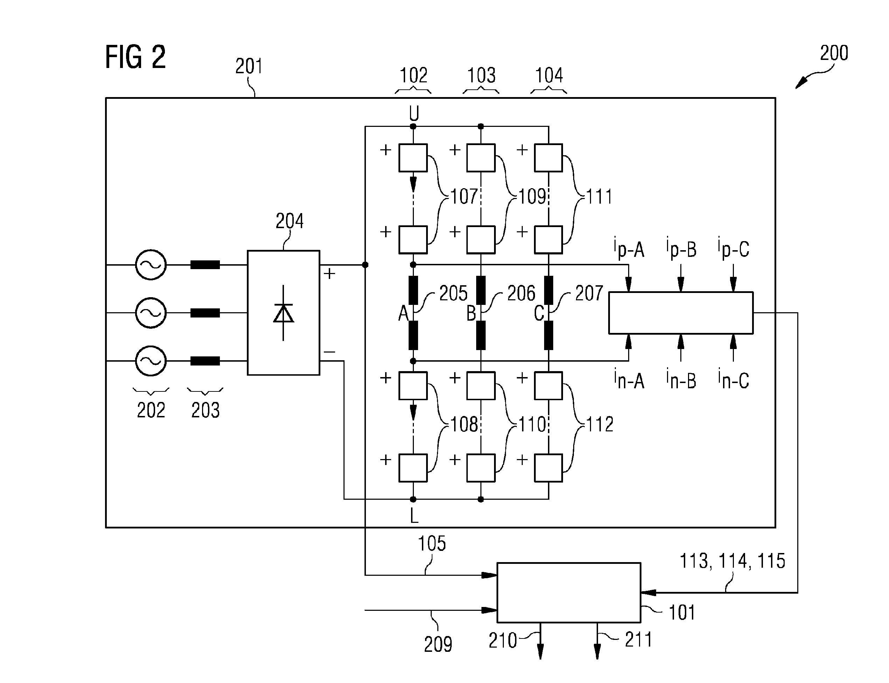

As a basis for the mathematical model, the overall design of a MMC converter 200 with an observing unit 101 as shown in Fig. 2 may be considered.

In addition to the MMC as shown in Fig. 1., the MMC as shown in Fig. 2 comprises three input voltages sources 202, being coupled via inductors 203 to a rectifier 204. The output of the rectifier is coupled to the observing unit 101 as input 105. In addition to the arm currents 113, 114, 115 being measured by the measuring unit 208 at inductors 205, 206, 207, the states of the switches of the cells is supplied to the observing unit 101 to be considered during estimation. The observing unit estimates the capacitances 210 of the cells (more particularly of the capacitors within the cells) and the capacitor voltages 211.

The mathematical model describing the behavior of a N-cells MMC converter is given by

$$\frac{di_{p-u}}{dt} = \frac{1}{L_1}\left[E_p - \sum_{i=1}^{N}(S_i . V_{C_i}) - R_1 i_p - V_{a-u}\right] \quad where\ u = a, b,\ or\ c$$

$$\frac{di_{n-u}}{dt} = \frac{1}{L_1}\left[E_n - \sum_{i=N+1}^{2N}(S_i . V_{C_i}) - R_1 i_n + V_{a-u}\right] \quad\quad (1)$$

$$\frac{dV_{C_i}}{dt} = \frac{1}{C}(i_{p-u} . S_i) \quad\quad i = 1, ... N$$

$$\frac{dV_{C_i}}{dt} = \frac{1}{C}(i_{n-u} . S_i) \quad\quad i = N+1, ... 2N$$

$$y_1 = i_{p-u}$$

$$y_2 = i_{n-u}$$

Where $i_{p-u}$ is the upper arm currents, $i_{n-u}$ is the lower arm currents, $S_i$ is the gating signal of the upper gate, and $V_{C_i}$ and $V_{a-u}$ are the capacitor voltage of i-th cell and phase-u voltage, respectively. The gating signal of the lower gate is the complementary of $S_i$. Every phase-leg is composed of two arms where each arm has a number of N cells. It will be now assumed that arm currents, $i_p$ and $i_n$, are measured (observer input) and are taken as the system outputs. So, the states of $V_{C_i} i=1,..N$ are not available for feedback. The control objective is to make capacitor voltages estimation track the desired reference voltage command ($V_{dc}/N$). Moreover, the observer should involve an estimation of the unknown constant parameters which are simplified by following notations:

$$a_i = \frac{1}{C_i} \qquad i = 1, \ldots 2N$$

$$(2)$$

The prediction model for the adaptive observer is chosen to be

$$\frac{d\hat{i}_{p-u}}{dt} = \frac{1}{L_1} \left[ E_p - \sum_{i=1}^{N} (S_i \cdot \hat{V}_{C_i}) - R_1 i_p - V_{a-u} \right] + K_j \cdot g(\tilde{i}_p) + K_l \tilde{i}_p \qquad u = a, b, \text{ or } c$$

$$\frac{d\hat{i}_{n-u}}{dt} = \frac{1}{L_1} \left[ E_n - \sum_{i=N+1}^{2N} (S_i \cdot \hat{V}_{C_i}) - R_1 i_n + V_{a-u} \right] + K_j' \cdot g(\tilde{i}_n) + K_l' \tilde{i}_n \qquad (3)$$

$$\frac{d\hat{V}_{C_i}}{dt} = \hat{a}_i (i_{p-u} \cdot S_i) + K_i \cdot g(\tilde{i}_p) \qquad i = 1, \ldots N$$

$$\frac{d\hat{V}_{C_i}}{dt} = \hat{a}_i (i_{n-u} \cdot S_i) + K_i \cdot g(\tilde{i}_n) \qquad i = N+1, \ldots 2N$$

$$\hat{y}_1 = \hat{i}_{p-u}$$

$$\hat{y}_2 = \hat{i}_{n-u}$$

Where $K_j, K_l, K_j'$ and $K_l'$ are the observer gains, and g(.) denotes a nonlinear function of the arm currents estimation errors $\tilde{i}_p, \tilde{i}_n$.

The correction terms $K_j \, g(\tilde{i}_p), K_l \tilde{i}_p, K_j' \, g(\tilde{i}_n), K_l' \tilde{i}_n$ and $K_i g(\tilde{i}_p), K_i g(\tilde{i}_n)$ are used for arm currents and capacitor voltages equations that will be described later. The observation error dynamics for the proposed observer can be written by subtracting (1) from the estimated model (3), respectively, as stated below:

$$\frac{d\tilde{i}_{p-u}}{dt} = \frac{1}{L_1}\left[-\sum_{i=1}^{N}(S_i.\tilde{V}_{C_i})\right] + K_j.g(\tilde{i}_p) + K_l\tilde{i}_p \qquad u = a, b, \text{ or } c$$

$$\frac{d\tilde{i}_{n-u}}{dt} = \frac{1}{L_1}\left[-\sum_{i=N+1}^{2N}(S_i.\tilde{V}_{C_i})\right] + K_j'.g(\tilde{i}_n) + K_l'\tilde{i}_n \qquad (4)$$

$$\frac{d\tilde{V}_{C_i}}{dt} = \tilde{a}_i(i_{p-u}.S_i) + K_i.g(\tilde{i}_p) \qquad i = 1, \ldots N$$

$$\frac{d\tilde{V}_{C_i}}{dt} = \tilde{a}_i(i_{n-u}.S_i) + K_i.g(\tilde{i}_n) \qquad i = N+1, \ldots 2N$$

$$\tilde{y}_1 = \tilde{i}_{p-u}$$

$$\tilde{y}_2 = \tilde{i}_{n-u}$$

Where

$$\tilde{V}_{C_i} = \hat{V}_{C_i} - V_{C_i}, \quad \tilde{i}_{p-u} = \hat{i}_{p-u} - i_{p-u}, \quad \tilde{i}_{n-u} = \hat{i}_{n-u} - i_{n-u}$$

$$\tilde{a}_i = \hat{a}_i - a_i, \quad \tilde{y}_1 = \hat{y}_1 - y_1, \quad \tilde{y}_2 = \hat{y}_2 - y_2 \qquad (5)$$

It should be noted that the estimated quantities are shown as $\hat{x}$ and the estimation error of the states or parameters are shown with the $\tilde{x}$ sign. In order to derive the observer gains and determine the adaptation laws for unknown parameters (capacitance values) and analyze the convergence of the adaptive observer, the following Lyapunov function is selected

$$V_e = \frac{1}{2}\left(\tilde{i}_p^2 + \tilde{i}_n^2 + \sum_{i=1}^{2N}(S_i.\tilde{V}_{C_i}^2) + \sum_{i=1}^{2N}\frac{1}{\rho_i}\tilde{a}_i^2\right) \qquad (6)$$

Where $\rho_i$ is any real constant, called parameter adaptation gain.
In view of (4), the time differentiation of $V_e$ is

$$\dot{V}_e = \tilde{i}_p \left\{ \frac{1}{L_1}\left[ -\sum_{i=1}^{N}(S_i.\tilde{V}_{C_i}) \right] + K_j.g(\tilde{i}_p) + K_l\tilde{i}_p \right\}$$

$$+ \tilde{i}_n \left\{ \frac{1}{L_1}\left[ -\sum_{i=N+1}^{2N}(S_i.\tilde{V}_{C_i}) \right] + K_j'.g(\tilde{i}_n) + K_l'\tilde{i}_n \right\}$$

$$+ \sum_{i=1}^{N}\left( \tilde{V}_{C_i}.\left[ \tilde{a}_i(i_{p-u}.S_i) + K_i.g(\tilde{i}_p) \right] \right) \tag{7}$$

$$+ \sum_{i=N+1}^{2N}\left( \tilde{V}_{C_i}.\left[ \tilde{a}_i(i_{n-u}.S_i) + K_i.g(\tilde{i}_n) \right] \right) + \sum_{i=1}^{2N}\tilde{a}_i\frac{1}{\rho_i}\frac{d}{dt}\tilde{a}_i$$

As in (7), if all the terms including then $\tilde{a}_i$ grouped together, then one get

$$\dot{V}_e = \tilde{i}_p^2\left( K_l \right) + \tilde{i}_p\left( K_j.g(\tilde{i}_p) \right) + \tilde{i}_n^2\left( K_l' \right) + \tilde{i}_n\left( K_j'.g(\tilde{i}_n) \right)$$

$$+ \sum_{i=1}^{N}(\tilde{V}_{C_i}.K_i.g(\tilde{i}_p)) + \sum_{i=N+1}^{2N}\left( \tilde{V}_{C_i}.K_i.g(\tilde{i}_n) \right) \tag{8}$$

$$+ \sum_{i=1}^{N}\tilde{a}_i\left[ \frac{1}{\rho_i}\frac{d}{dt}\tilde{a}_i + \tilde{V}_{C_i}(i_{p-u}.S_i) \right] + \sum_{i=N+1}^{2N}\tilde{a}_i\left[ \frac{1}{\rho_i}\frac{d}{dt}\tilde{a}_i + \tilde{V}_{C_i}(i_{n-u}.S_i) \right]$$

To eliminate them, the terms in brackets are zero. Consequently, update laws are chosen as:

$$\sum_{i=1}^{N}\frac{d}{dt}\tilde{a}_i = -\sum_{i=1}^{N}\rho_i\left[ \tilde{V}_{C_i}(i_{p-u}.S_i) \right]$$

$$\sum_{i=N+1}^{2N}\frac{d}{dt}\tilde{a}_i = -\sum_{i=N+1}^{2N}\rho_i\left[ \tilde{V}_{C_i}(i_{n-u}.S_i) \right] \tag{9}$$

Since variations of the capacitance values in the observer time scale are negligible, thus, one obtain

$$\frac{d\tilde{a}_i}{dt} = \frac{d\hat{a}_i}{dt} - \frac{da_i}{dt} \approx \frac{d\hat{a}_i}{dt} \tag{10}$$

If $g(\tilde{i}_p)=\mathrm{sign}(\tilde{i}_p)$ and $g(\tilde{i}_n)=\mathrm{sign}(\tilde{i}_n)$, it results in

$$\dot{V}_e = \tilde{i}_p^2\left(K_l\right) + \tilde{i}_n^2\left(K_l'\right) + sign(\tilde{i}_p)\left[\sum_{i=1}^{N}(\tilde{V}_{C_i}.K_i) + K_j\tilde{i}_p\right]$$

$$+ sign(\tilde{i}_n)\left[\sum_{i=N+1}^{2N}\left(\tilde{V}_{C_i}.K_i\right) + K_j'\tilde{i}_n\right] \quad\quad (11)$$

If the observer gains are chosen high enough in such a way that

$$K_j.\tilde{i}_p > \sum_{i=1}^{N}(\tilde{V}_{C_i}.K_i)$$

$$K_j'.\tilde{i}_n > \sum_{i=N+1}^{2N}\left(\tilde{V}_{C_i}.K_i\right) \quad\quad (12)$$

Since $K_l$ and $K_l'$ are negative scalars, thus $\dot{V}_e<0$, which implies that the proposed observer is stable and the capacitor voltages estimation errors converge to zero.

The estimated capacitor voltages appear in the adaptation rules for capacitance values. These variables are determined from (3). So, estimation of capacitance value is not decoupled from the estimation of capacitor voltage. In fact, the observer equations and adaptation rules may be implemented and solved all together. In other words, the convergence rate for the estimated parameters and capacitor voltages are dependent on the observer and adaptation gains as well.

Once the arm currents estimation errors converge to zero, the error equations are given by

$$0 = \frac{1}{L_1}\left[-\sum_{i=1}^{N}(S_i.\tilde{V}_{C_i})\right] + K_j.\overline{g}(\tilde{i}_p) \quad\quad u = a, b, \text{ or } c$$

$$0 = \frac{1}{L_1}\left[-\sum_{i=N+1}^{2N}(S_i.\tilde{V}_{C_i})\right] + K_j'.\overline{g}(\tilde{i}_n)$$

$$\frac{d\tilde{V}_{C_i}}{dt} = \tilde{a}_i\,(i_{p-u}.S_i) + K_i.\overline{g}(\tilde{i}_p) \quad\quad i = 1,...N \quad\quad (13)$$

$$\frac{d\tilde{V}_{C_i}}{dt} = \tilde{a}_i\,(i_{n-u}.S_i) + K_i.\overline{g}(\tilde{i}_n) \quad\quad i = N+1,...2N$$

The equivalent observer correction functions, presented by $\overline{g}(i_p), \overline{g}(\tilde{i}_n)$ which are obtained by first and second equations in (13) as follow:

$$0 = \frac{1}{L_1}\left[-\sum_{i=1}^{N}(S_i.\tilde{V}_{C_i})\right] + K_j.\overline{g}(\tilde{i}_p)$$

$$0 = \frac{1}{L_1}\left[-\sum_{i=N+1}^{2N}(S_i.\tilde{V}_{C_i})\right] + K_j'.\overline{g}(\tilde{i}_n)$$

$$\Rightarrow \begin{cases} \overline{g}(\tilde{i}_p) = \dfrac{1}{L_1.K_j}\left[\sum_{i=1}^{N}(S_i.\tilde{V}_{C_i})\right] \\[2ex] \overline{g}(\tilde{i}_n) = \dfrac{1}{L_1.K_j'}\left[\sum_{i=N+1}^{2N}(S_i.\tilde{V}_{C_i})\right] \end{cases} \tag{14}$$

Substituting the expression (14) into (13), the error dynamics of capacitor voltages yields:

$$\frac{d\tilde{V}_{C_i}}{dt} = \tilde{a}_i\,(i_{p-u}.S_i) + K_i.\frac{1}{L_1.K_j}\left[\sum_{i=1}^{N}(S_i.\tilde{V}_{C_i})\right] \qquad i = 1,...N$$

$$\frac{d\tilde{V}_{C_i}}{dt} = \tilde{a}_i\,(i_{n-u}.S_i) + K_i.\frac{1}{L_1.K_j'}\left[\sum_{i=N+1}^{2N}(S_i.\tilde{V}_{C_i})\right] \qquad i = N+1,...2N \tag{15}$$

From (6) and (11), the LaSalle-Yoshizawa theorem guarantees the boundedness of $\tilde{a}_i, \tilde{V}_{C_i}$ and the convergence of the tracking errors to zero as $t \to \infty$. From Barbalat's Lemma, it can be concluded that the system converges exponentially. In particular, this may denote that the observer errors converge to zero if the Persistent Excitation (PE) condition is satisfied. Therefore, the adaptive observer is asymptotically stable, even if parametric uncertainty exists.

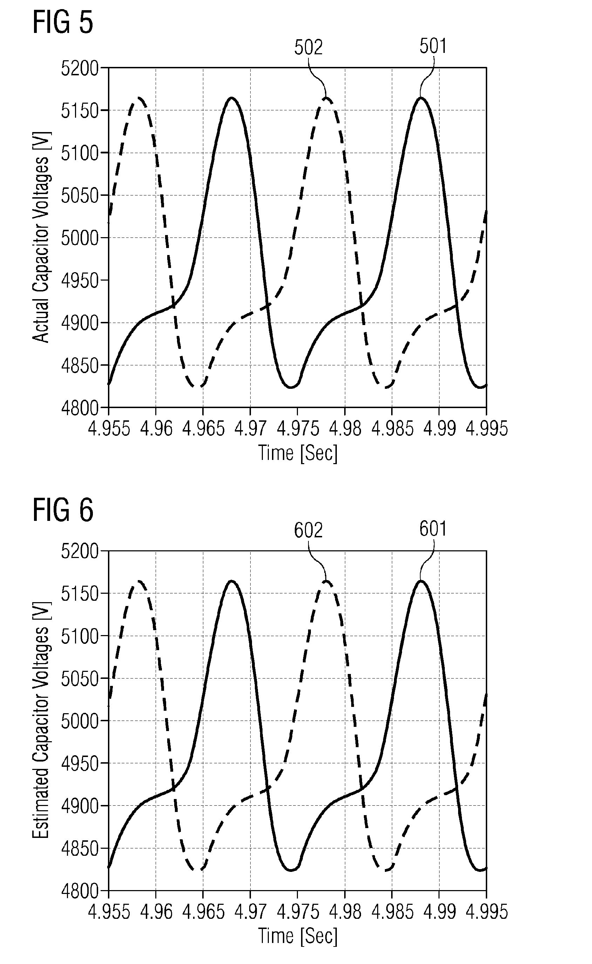

In Figs. 5 to 11, some simulation results are to describe the results of the proposed method with 2 cells in each arm in an exemplary way.

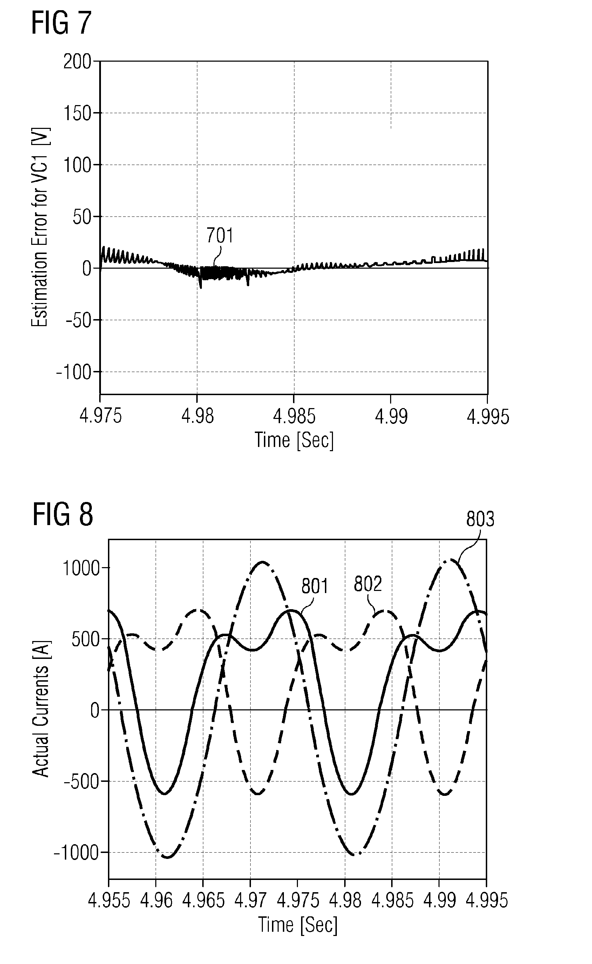

Fig. 5 displays the actual capacitor voltages, wherein 501 shows the lower 2 capacitors and 502 shows the upper 2 capacitors. Fig. 6 shows the estimated voltages, wherein 601 illustrates the lower 2 capacitors and 602 illustrates the upper 2 capacitors. Fig. 7 illustrates the estimation error of $V_{C_i}$ 701.

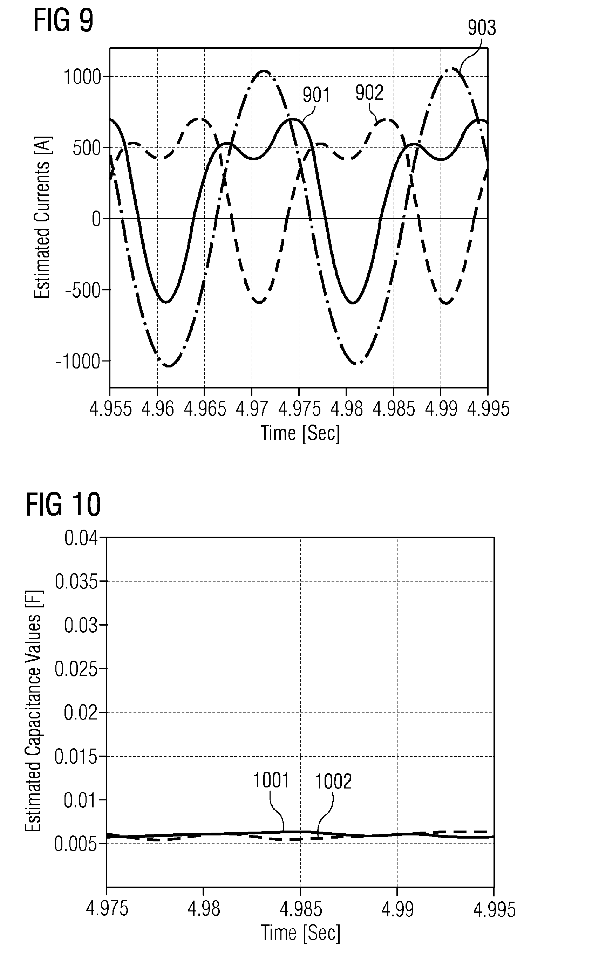

In Figs. 8 and 9, the estimator performance is shown in more detail. Here, it is possible to see how the estimated currents are similar to the measured currents. In Fig. 8, 801 shows the measured upper arm current, 802 shows the measured lower arm current and 803 shows the measured load current. In Fig. 9, 901 shows the estimated upper arm current, 902 shows the estimated lower arm current and 903 shows the estimated load current.

As illustrated in these figures, the herein described method and MMC design with the observing unit can estimate the capacitors voltages precisely while the estimation error is almost negligible.

Fig. 10 presents the estimated capacitance by developed observer which is satisfactory. In steady state, the estimation error compared with the nominal value (6 mF) is about 0.2%. 1001 shows the estimated upper arm capacitance and 1002 shows the estimated lower arm capacitance.

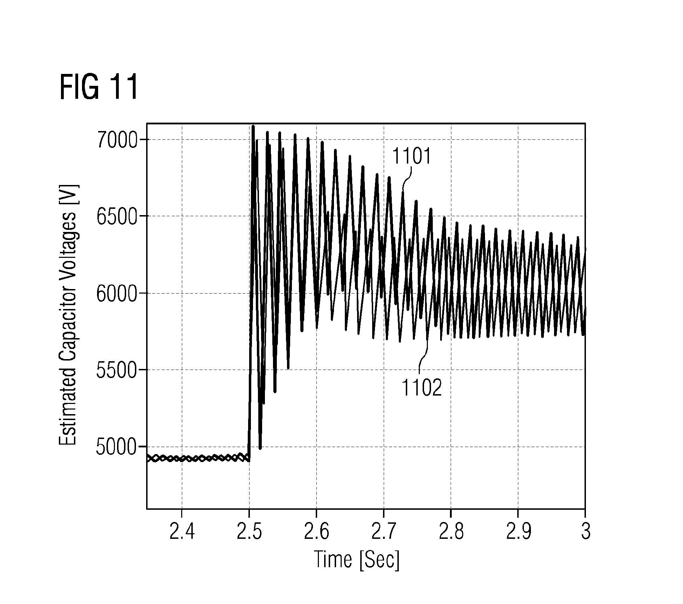

For evaluating observer performance with respect to start-up transient response, a step up disturbance is applied in the dc-link voltage. At t=2.5 sec, it is changed from 10kV to 12kV. Due to the capacitor voltage references are a function of the dc link voltage, the observer quickly tracks the references until to reach desired value as it is shown in Fig. 11. In Fig. 11, 1101 shows the estimated capacitor voltages of the 2 lower capacitors under step change in $V_{dc}$ and 1102 shows the estimated capacitor voltages of the 2 upper capacitors under step change in $V_{dc}$.

As it has been shown, the herein described MMC design having an adaptive observer for estimating the capacitor voltages of MMC, which is dependent only on arm currents measurement, the estimated capacitor voltages and capacitance values converge to the corresponding measured values. The proposed strategy is simple and can be used in real time implementation.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A modular multilevel converter (100) for converting a direct current voltage into an alternating current voltage, the modular multilevel converter comprising
   a plurality of phase units (102, 103, 104) being arranged in parallel, each phase unit comprising an upper converter arm and a lower converter arm, each converter arm having a plurality of cells (107, 108, 109, 110, 111, 112) being arranged in series, wherein each cell (107, 108, 109, 110, 111, 112) comprises a direct current capacitor, wherein each phase unit (102, 103, 104) is connectable to a direct current voltage source (202) ,
   a control unit being adapted to control the cells (107, 108, 109, 110, 111, 112) of the phase units (102, 103, 104) to convert a direct current input voltage (105) from the direct current voltage source (202) into an alternating current output voltage by charging at least one direct current capacitor of a phase unit (102, 103, 104) with the direct current input voltage (105),
   a measuring unit (208) being adapted to measure a lower converter arm current of each phase unit (102, 103, 103) and an upper converter arm current of each phase unit (102, 103, 104), and
   an observing unit (101) being adapted to estimate a capacitor voltage of each cell (107, 108, 109, 110, 111, 112) based on the measured converter arm currents and based on the direct current input voltage (105),
   wherein the control unitis adapted to control the power conversion by controlling each phase unit (102, 103, 104) based on the estimated capacitor voltages.

2. The modular multilevel converter (100) as set forth in claim 1,
   wherein the control unit is further adapted to control the capacitor voltage of each cell (107, 108, 109, 110, 111, 112) by switching on or off the cells based on the estimated capacitor voltages.

3. The modular multilevel converter (100) as set forth in any one of the preceding claims,
   wherein the observing unit (101) is further adapted to estimate the capacitance of each cell (107, 108, 109, 110, 111, 112) based on the measured converter arm currents and based on the direct current input voltage (105).

4. The modular multilevel converter (100) as set forth in any one of the preceding claims,
   wherein the control unit is further adapted to switch on a part of the cells (107, 108, 109, 110, 111, 112) of one phase unit (102, 103, 104) and to bypass the other part of the cells (107, 108, 109, 110, 111, 112) of the phase unit at the same point of time, such that the voltage sum of the switched-on cells in the phase unit is equal to the direct current input voltage.

5. The modular multilevel converter (100) as set forth in any one of the preceding claims,
   wherein the observing unit (101) is adapted to perform an adaptive control method by adapting gain values, which are used as adjusting parameters for estimating the capacitor values.

6. The modular multilevel converter (100) as set forth in claim 5,
   wherein the observing unit (101) is adapted to adapt the gain values based on an error of the estimated capacitor values.

7. The modular multilevel converter (100) as set forth in any one of the preceding claims,
   the modular multilevel converter (100) further comprising a rectifier (204) having an input and an output, wherein the input is coupled with the direct current voltage source (202), and wherein the output is coupled to the observing unit (101) for supplying a rectified direct current input voltage (105) to the observing unit.

8. The modular multilevel converter (100) as set forth in any one of the preceding claims,
   wherein the observing unit (101) is part of the control unit of the modular multilevel converter.

9. The modular multilevel converter (100) as set forth in any one of the preceding claims,
   wherein each cell (107, 108, 109, 110, 111, 112) comprises a switch.

**10.** Method for converting a direct current voltage into an alternating current voltage by a modular multilevel converter, wherein the modular multilevel converter comprises

a plurality of phase units being arranged in parallel, each phase unit comprising an upper converter arm and a lower converter arm, each converter arm having a plurality of cells being arranged in series, wherein each cell comprises a direct current capacitor, wherein each phase unit is connected to a direct current voltage source, the method comprising

controlling, by a control unit, the cells of the phase units to convert a direct current input voltage from the direct current voltage source into an alternating current output voltage by charging at least one direct current capacitor of a phase unit with the direct current input voltage,

measuring, by a measuring unit, a lower converter arm current of each phase unit and an upper converter arm current of each phase unit,

estimating, by an observing unit, a capacitor voltage of each cell based on the measured converter arm currents and based on the direct current input voltage, and

controlling, by the control unit, the power conversion by controlling each phase unit based on the estimated capacitor voltages.

**11.** A computer program for converting a direct current voltage into an alternating current voltage by a modular multilevel converter, the computer program, when being executed by a data processor, is adapted for controlling the method as set forth in claim 10.

**12.** A computer-readable medium, in which a computer program for converting a direct current voltage into an alternating current voltage by a modular multilevel converter is stored, which computer program, when being executed by a processor, is adapted to carry out or control a method as set forth in claim 10.

FIG 1

FIG 2

## FIG 3

## FIG 4

FIG 5

FIG 6

**FIG 7**

**FIG 8**

## FIG 9

## FIG 10

FIG 11

Europäisches
Patentamt

European
Patent Office

Office européen
des brevets

# EUROPEAN SEARCH REPORT

**Application Number**

EP 12 17 2522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHUCO B ET AL: "A comparative study of dynamic performance of HVDC system based on conventional VSC and MMC-VSC", 2010 IREP SYMPOSIUM BULK POWER SYSTEM DYNAMICS AND CONTROL - VIII (IREP 2010) : [BUZIOS], RIO DE JANEIRO, BRAZIL, 1 - 6 AUGUST 2010, IEEE, PISCATAWAY, NJ, USA, 1 August 2010 (2010-08-01), pages 1-6, XP031746821, ISBN: 978-1-4244-7466-0 * page 3, left-hand column, line 1 - page 4, left-hand column, line 24 * ----- | 1-4,8-12 | INV. H02M7/483 |
| X | LENNART ANGQUIST ET AL: "Inner control of Modular Multilevel Converters - An approach using open-loop estimation of stored energy", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21 June 2010 (2010-06-21), pages 1579-1585, XP031729743, ISBN: 978-1-4244-5394-8 * abstract * * paragraph [0001] * ----- | 1-4,8-12 | |
| X | RICARDO P AGUILERA ET AL: "Capacitor voltage estimation for predictive control algorithm of flying capacitor converters", INDUSTRIAL TECHNOLOGY, 2009. ICIT 2009. IEEE INTERNATIONAL CONFERENCE ON, IEEE, PISCATAWAY, NJ, USA, 10 February 2009 (2009-02-10), pages 1-6, XP031456968, ISBN: 978-1-4244-3506-7 * abstract * * paragraph [0001] * ----- -/-- | 1-4,8-12 | |

**TECHNICAL FIELDS SEARCHED (IPC)**

H02M

The present search report has been drawn up for all claims

| Place of search | Date of completion of the search | Examiner |
|---|---|---|
| The Hague | 6 November 2012 | Speiser, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 12 17 2522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LESNICAR A ET AL: "A new modular voltage source inverter topology", INTERNET CITATION, 2003, XP002454302, Retrieved from the Internet: URL:http://www.unibw.de/eit62/forsch/SP/M2 LC/m2lcveroef [retrieved on 2007-10-10] * paragraph [0002] * | 1,10 | |
| A | WO 2011/098100 A1 (SIEMENS AG [DE]; GOERGES DANIEL [DE]; ISAK MICHAL [DE]; LIU STEVEN [DE] 18 August 2011 (2011-08-18) * page 2, line 5 - page 2, line 28; figures 2,3 * | 1,10 | |

TECHNICAL FIELDS
SEARCHED      (IPC)

The present search report has been drawn up for all claims

| Place of search | Date of completion of the search | Examiner |
|---|---|---|
| The Hague | 6 November 2012 | Speiser, Pierre |

EPO FORM 1503 03.82 (P04C01)

**ANNEX TO THE EUROPEAN SEARCH REPORT
ON EUROPEAN PATENT APPLICATION NO.**                    EP 12 17 2522

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2012

| Patent document cited in search report | Publication date | Patent family member(s) | Publication date |
|---|---|---|---|
| WO 2011098100 A1 | 18-08-2011 | NONE | |